# FASCICULE DE BREVET EUROPEEN

(11) **EP 1 623 873 B1**
(45) Date de publication et mention de la délivrance du brevet: **25.08.2010**
(21) Numéro de dépôt: 05291418.1
(22) Date de dépôt: 30.06.2005
(51) Int. Cl.: B60Q 1/04, B62D 25/08

(54) **Ensemble de partie avant d'un véhicule automobile**
Vorderwagenaufbau eines Kraftfahrzeuges
Vehicle front body structure

(30) Priorité: 02.08.2004 FR 0408533
(43) Date de publication de la demande: 08.02.2006
(73) Titulaire: Faurecia Bloc Avant, 92000 Nanterre (FR)
(72) Inventeur: Bierjon, Didier, 25400 Audincourt (FR); Mary, Raphaël, 85110 Schelldorf (DE)
(74) Mandataire: Lanceplaine, Jean-Claude

(56) Documents cités:
- EP-A- 0 878 353
- EP-A- 1 232 932
- EP-A- 1 481 878
- FR-A- 2 827 251
- FR-A- 2 855 487
- FR-A- 2 857 645

## Description

La présente invention concerne un ensemble de partie avant d'un véhicule automobile.

La partie avant des véhicules automobiles comporte généralement une partie transversale, rigide, qui comporte une région centrale de maintien d'organes fonctionnels et qui est solidaire à la structure du véhicule, un pare-chocs relié à cette structure, une peau de pare-chocs formant carénage dudit pare-chocs et deux blocs optiques.

Une difficulté majeure rencontrée par les constructeurs automobiles consiste à positionner de façon précise les blocs optiques par rapport aux autres éléments d'aspect constitués par les ailes et la peau de pare-chocs. Cet ajustage est important du fait qu'un défaut de continuité de surface de la partie visible du bloc optique, c'est à dire de la glace, de l'aile correspondante, et de la peau de pare-chocs, dégrade sensiblement la qualité esthétique du véhicule.

En outre, un réglage précis de la position de chaque bloc optique par rapport à l'aile adjacente et à la peau de pare-chocs est difficile à obtenir au cours de l'opération d'assemblage de ces différents éléments entre eux.

Ces difficultés ont été accrues par la généralisation des optiques monoblocs intégrant la fonction de clignotants, alors qu'auparavant, la partie de clignotant était ajustable par rapport à la partie principale du boîtier du bloc optique, de sorte qu'il était relativement aisé de compenser les tolérances de positionnement relatif des différents composants de la partie avant du véhicule automobile.

Pour répondre à ces contraintes, des solutions variées ont été envisagées et notamment l'utilisation d'une face avant technique également appelée "FAT", qui présente, d'une part, une partie centrale de maintien des organes fonctionnels et qui est solidaire de la structure du véhicule et, d'autre part, deux parties latérales supportant chacune un bloc optique par l'intermédiaire d'une poutre flexible s'étendant latéralement et formant aussi des supports de la peau de pare-chocs, dont chacune a une première extrémité reliée à cette partie centrale de la face avant technique et une seconde extrémité destinée à être reliée à une partie avant d'une aile de la carrosserie du véhicule.

Un tel ensemble est par exemple décrit dans le document EP-A-1 232 932.

La structure décrite dans ce document permet un positionnement automatique et permanent des contours visibles des blocs optiques par rapport aux extrémités d'aile correspondante et à la peau de pare-chocs.

Mais, cette solution nécessite l'emploi d'une face avant technique formant un support à l'ensemble des éléments constituant le bloc avant ce qui peut dans certains cas, présenter des inconvénients du fait par exemple du poids supplémentaire engendré par cette pièce.

Le document FR-A-2 827 251 décrit un ensemble de partie avant de véhicule automobile tel que décrit par le préambule de la revendication 1, et comportant deux projecteurs, une peau de pare-chocs, deux pièces du maintien et une traverse. Chaque pièce de maintien comporte une base et, à chacune de ses extrémités, deux bras s'étendant vers le haut. Les extrémités des bras sont fixées respectivement à un prolongement de la traverse et à l'extrémité de cette traverse. Chaque projecteur est en appui sur le bord supérieur de la peau de pare-chocs qui est lui-même en appui sur la base de la pièce de maintien correspondante.

L'invention a pour but de proposer un ensemble de partie avant d'un véhicule automobile qui forme un module préassemblé dont les différents éléments peuvent être automatiquement réglés et bloqués en position, pour assurer une continuité d'aspect entre eux et également avec les éléments adjacents de la structure du véhicule automobile.

L'invention a donc pour objet un ensemble de partie avant d'un véhicule automobile, destiné à être fixé sur la structure du véhicule et comprenant une peau de pare-chocs formant carénage d'un pare-chocs et deux blocs optiques, **caractérisé en ce qu**'il comprend également :
deux poutres flexibles (30) comportant chacune une première extrémité (34) de fixation de la peau de pare-chocs (10) et une seconde extrémité (35) destinée à être reliée à une partie avant (2a) d'une aile de carrosserie (2) et un renfort horizontale (45) reliant les premières extrémités (34) des deux poutres flexibles (30) entre elles, ladite poutre (30) étant susceptible de se déformer élastiquement en fonction de mouvements relatifs d'ajustement de la peau de pare-chocs (10), du bloc optique (20) et/ou de l'aile (2), **caractérisé en ce que** chaque poutre flexible (30) comporte une partie centrale (31) munie de moyens (32, 33) d'indexage des blocs optiques (20) selon trois axes X, Y et Z et de moyens (38) d'indexage de la peau de pare-chocs (10) selon deux axes X et Z solidaires du bloc optique et destinées à coopérer chacune avec un desdits pions,

- les moyens d'indexage de la peau de pare-chocs sont formés par au moins une portion en creux ménagée sur la partie supérieure de la poutre et s'étendant transversalement suivant la direction générale de cette poutre et par au moins une portion en saillie complémentaire ménagée à la partie supérieure de la peau de pare-chocs,
- le renfort comporte des moyens de positionnement de la zone centrale de la peau de pare-chocs,
- les moyens de positionnement sont formés par au moins une gouttière s'étendant transversalement suivant la direction générale du renfort et destinée à coopérer avec ladite zone centrale de la peau de pare-chocs,
- la première extrémité de chaque poutre flexible comporte une patte inférieure dirigée vers le bas, perpendiculairement à la partie centrale de cette poutre pour la fixation d'une poutre supérieure de renfort s'étendant transversalement entre les poutres flexibles,
- la seconde extrémité de chaque poutre flexible comporte une patte de fixation d'une poutre inférieure de renfort s'étendant transversalement entre les poutres flexibles, parallèlement à la poutre supérieure du renfort,
- chaque poutre flexible comporte une zone de flexion disposée entre la première extrémité et la fixation du bloc optique correspondant, et
- la zone de flexion est formée par une encoche sensiblement verticale.

L'invention sera mieux comprise à la lecture de la description qui va suivre, donnée à titre d'exemple et faite en se référant aux dessins annexés, sur lesquels :
- la Fig. 1 est une vue schématique en perspective d'un ensemble de partie avant, conforme à l'invention,
- la Fig. 2 est une vue schématique en perspective éclatée des différents éléments composant l'ensemble de partie avant, conforme à l'invention,
- la Fig. 3 est une vue schématique en perspective d'une poutre flexible de l'ensemble de partie avant, conforme à l'invention,
- la Fig. 4 est une vue schématique en perspective de la partie avant sans la peau de pare-chocs et montrant une première variante de la poutre flexible de cette partie avant, et
- la Fig. 5 est une vue schématique en perspective de la partie avant sans la peau de pare-chocs et montrant une seconde variante de la poutre flexible de cette partie avant.

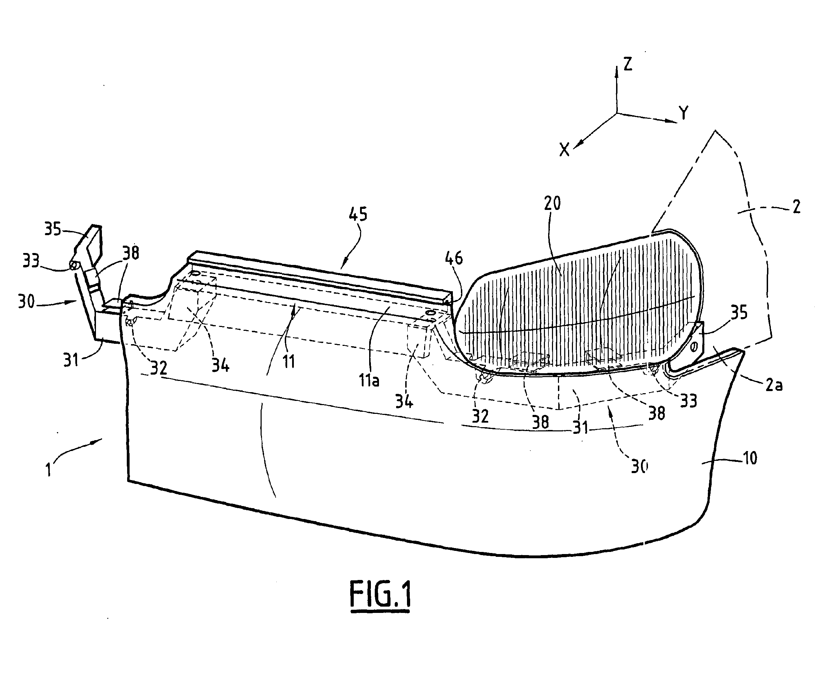

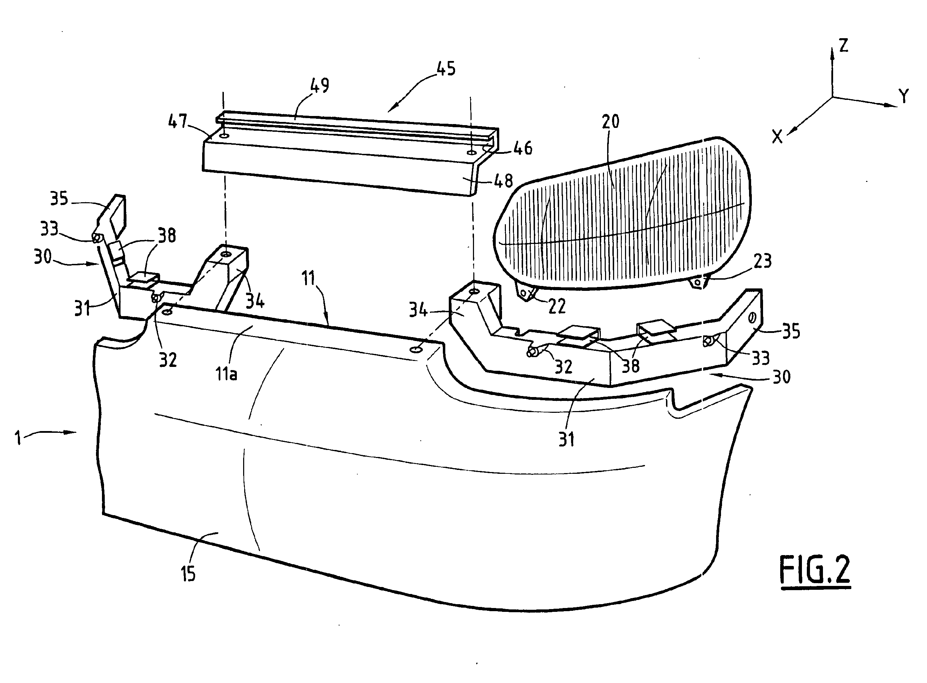

Sur les Figs. 1 et 2, on a représenté schématiquement une partie avant désignée dans son ensemble par la référence 1, représentée partiellement et une extrémité avant 2a d'une aile 2 de carrosserie du véhicule automobile.

Les Figs. 1 et 2 ont été orientées suivant trois axes X, Y et Z qui correspondent à l'orientation usuelle d'un véhicule automobile, à savoir respectivement l'axe longitudinal X orienté dans la direction de marche avant, l'axe transversal Y orienté de droite à gauche, du point de vue du conducteur, et l'axe vertical Z orienté de bas en haut.

Tous les termes utilisés dans la suite de la description, pouvant indiquer un sens ou un positionnement, doivent être compris en référence à ce système d'axes.

La partie avant 1 du véhicule représentée sur les Figs. 1 et 2 est symétrique ou quasi-symétrique par rapport à un plan médian vertical du véhicule si bien que, dans un but de clarté, la description qui suit sera faite pour un côté de cette partie avant, l'autre côté étant identique.

Cette partie avant 1 comprend une peau de pare-chocs 10, réalisée par exemple d'une pièce de matériau plastique, disposée sur toute la largeur de l'ensemble de partie avant 1, comme montrée à la Fig. 1, et dont les extrémités latérale s'appliquent sur un bord de l'extrémité avant 2a de l'aile 2 en coïncidence avec celui-ci. L'ensemble de partie avant 1 comporte, de plus, de chaque côté latéral, un bloc optique 20 disposé dans des formes complémentaires ménagées dans l'aile 2, la peau de pare-chocs 10 et un capot, non représenté, et au-dessus d'un bord supérieur 11 de cette peau de pare-chocs 10.

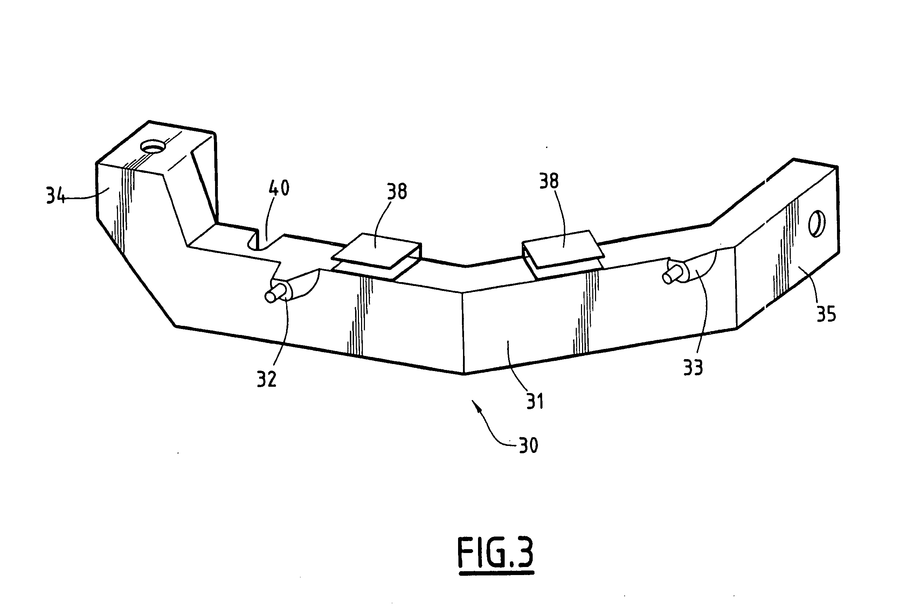

L'ensemble de partie avant 1 comporte également, de chaque côté latéral, une poutre flexible et galbée, désignée par la référence générale 30 et dont un premier exemple de réalisation est représenté à plus grande échelle à la Fig. 3. Chaque poutre flexible 30 s'étend essentiellement latéralement dans la direction de la peau de pare-chocs 10.

Comme montré sur cette figure, la poutre flexible 30 comporte une partie centrale 31 dont la face avant est pourvue d'un pion 32 en saillie, destiné à coopérer avec une première patte inférieure 22 du bloc optique 20 pour l'indexage de ce bloc optique 20 selon les axes X et Z et d'un second pion 33 en saillie destiné à coopérer avec une seconde patte inférieure 23 du bloc optique 20 pour l'indexage selon les axes X, Y, Z de ce bloc optique 20.

La poutre flexible 30 comporte une première extrémité 34 sur laquelle est fixé le bord supérieur 11 de la peau de pare-chocs 10 pour obtenir un positionnement selon l'axe Z de cette peau de pare-chocs 10 et d'une seconde extrémité 35 reliée à la partie avant 2a de l'aile de carrosserie 2, comme montré à la Fig. 1. Ainsi que représenté sur cette figure, le bord supérieur 11 de la peau de pare-chocs 6 est fixé sur la première extrémité 34 de chaque poutre flexible 30.

De plus, chaque poutre flexible 30 comporte des moyens d'indexage selon les axes X et Z de la peau de pare-chocs 10. Ces moyens d'indexage représentés notamment à la Fig. 3, comprennent au moins une portion en creux 38 ménagée sur la partie supérieure de la poutre 31. Dans l'exemple de réalisation représenté sur cette figure, ladite portion en creux est formée d'au moins une gouttière 38 et par exemple de deux gouttières 38, qui s'étendent transversalement suivant la direction générale de la poutre 30. Ces moyens d'indexage comprennent au moins une portion en saillie complémentaire ménagée à la partie supérieure de la peau de pare-chocs 10 et qui, dans l'exemple de réalisation montré sur les Figs. 1 et 2, est constitué par le bord supérieur 11 de cette peau de pare-chocs 10, de façon à réaliser un accrochage de ladite peau de pare-chocs 10 sur chaque poutre 30, avec une possibilité de mouvement relatif d'ajustement suivant la direction générale de cette poutre 30, c'est à dire selon l'axe Y.

Chaque poutre 30 comporte éventuellement une zone de flexion 40 disposée entre la première extrémité 34 et la portion centrale 31 et plus particulièrement entre la première extrémité 34 de fixation de la peau de pare-chocs 10 et la portion centrale 31 sur laquelle est monté le bloc optique 20 correspondant.

Cette zone de flexion est formée par exemple par une encoche 40 sensiblement verticale. Cette encoche 40 est notamment utile dans le cas où la partie d'extrémité 2a de l'aile 2 fixée sur la seconde extrémité 35 de la poutre 30 correspondante, est rigide.

Ainsi que montré sur les Figs 1 et 2, les deux premières extrémités 34 des deux poutres flexibles 30 sont reliées entre elles par un renfort horizontal 45 sur lequel est en appui une zone centrale 11a du bord supérieur 11 de la peau de pare-chocs 10. Ce renfort 45 est fixé, par tous moyens appropriés, comme par exemple des organes de vissage, sur chaque première extrémité 34 des poutres flexibles 30.

La zone centrale 11 a du bord supérieur 11 de la peau de pare-chocs 10 est en appui sur le renfort 45 et, en même temps, fixée sur les premières extrémités 34 par les mêmes organes que ceux fixant le renfort 45 sur lesdites premières extrémités 34. Le renfort 45 comporte des moyens de positionnement de la zone centrale 11a du bord supérieur 11 de la peau de pare-chocs 10 et qui sont formés par au moins une gouttière 46 s'étendant transversalement suivant la direction générale de ce renfort 45. L'ouverture de la gouttière 46 est dirigée vers l'avant du véhicule et est destinée à coopérer avec la zone centrale 11a du bord supérieur 11 et forme donc un encastrement pour cette partie centrale 11 a. De préférence, la gouttière 46 s'étend sur toute la longueur du renfort 45.

Dans l'exemple de réalisation représenté à la Fig. 2, le renfort 45 est formé par un profilé en forme de "S" comportant une âme centrale 47 destinée à être appliquée sur les premières extrémités 34 des poutres flexibles 30. Le profilé formant le renfort 45 comporte également un rebord avant 48 rabattu vers le bas et destiné à venir s'appliquer sur la face avant des poutres flexibles 30 et un rebord arrière 49 rabattu vers le haut formant la gouttière 46.

Ce renfort 45 entre les premières extrémités 34 des poutres flexibles 30 permet d'augmenter la rigidité de la peau de pare-chocs 10 notamment dans le cas d'une sollicitation verticale résultant par exemple de l'appui d'une personne sur la partie avant du véhicule ou lors d'un choc avec un piéton et également d'accroître la cohésion de l'ensemble des éléments composant l'ensemble de partie avant selon l'invention.

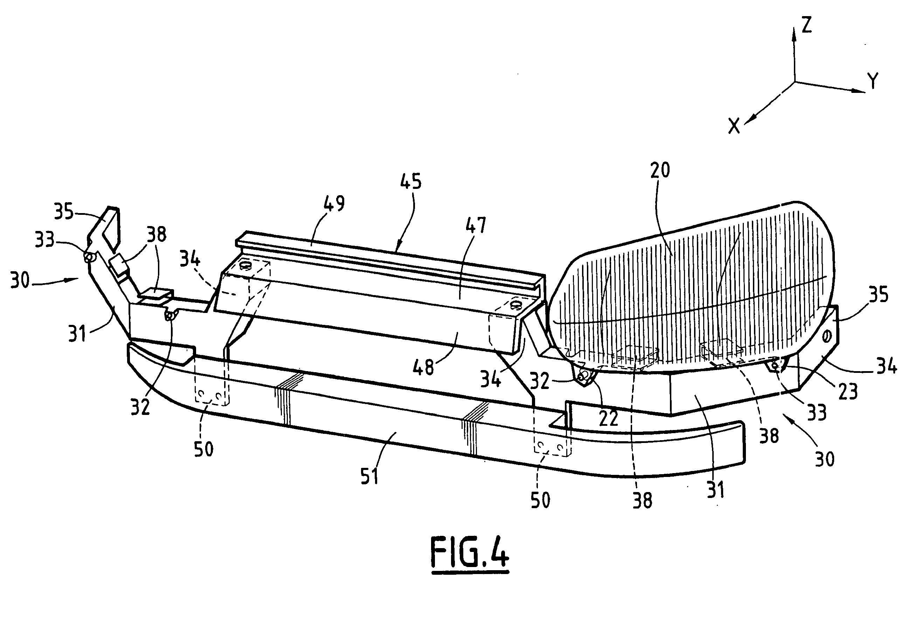

Selon une première variante illustrée à la Fig. 4, la première extrémité 34 de chaque poutre flexible 30 est pourvue d'une patte inférieure 50 dirigée vers le bas perpendiculairement à la partie centrale 31 de cette poutre flexible 30. Les pattes 50 des deux poutres flexibles 30 supportent une poutre inférieure 51 de renfort s'étendant donc transversalement entre ces poutres flexibles 30 parallèlement au renfort 45.

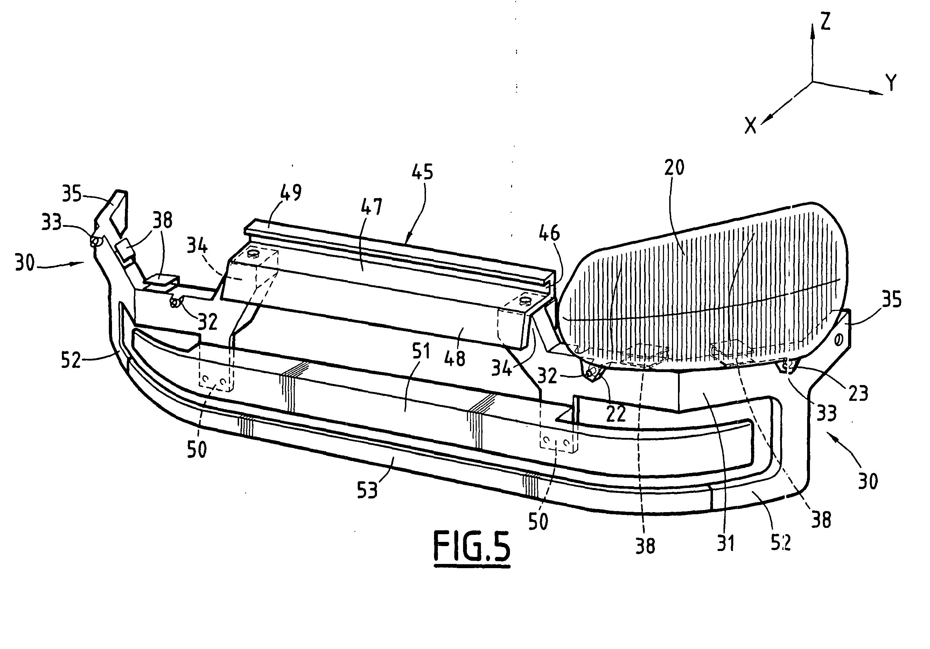

Selon une seconde variante représentée à la Fig. 5, la seconde extrémité 35 de chaque poutre flexible 30 est pourvue d'une patte 52 de fixation d'une poutre inférieure 53 de renfort s'étendant transversalement entre ces poutres flexibles 30, parallèlement à la poutre supérieure 51 de renfort et également parallèlement au renfort 45.

Ces poutres de renfort 51 et 53 forment des poutres de protection en cas de chocs avec un piéton.

L'ensemble de partie avant 1 selon l'invention forme, après assemblage des différents éléments le composant, un module indépendant qui peut être monté sur la structure du véhicule automobile.

L'élasticité des parties latérales de l'ensemble de partie avant selon l'invention apportée par l'élasticité de chaque poutre flexible permet durant le montage de cet ensemble sur la structure du véhicule, d'obtenir une déformation légère de ces parties latérales par resserrement vers l'intérieur et une qualité d'assemblage et une esthétique optimale de la partie avant du véhicule, constante dans le temps et ce sans opérations de reprise et d'ajustement supplémentaires, postérieures à l'assemblage du véhicule.

## Revendications

1. Ensemble de partie avant d'un véhicule automobile, destiné à être fixé sur la structure du véhicule et comprenant une peau de pare-chocs (10) formant carénage d'un pare-chocs et deux blocs optiques (20), ledit ensemble comprenant deux poutres flexibles (30) comportant chacune une première extrémité (34) de fixation de la peau de pare-chocs (10) et une seconde extrémité (35) destinée à être reliée à une partie avant (2a) d'une aile de carrosserie (2) et un renfort horizontale (45) reliant les premières extrémités (34) des deux poutres flexibles (30) entre elles, ladite poutre (30) étant susceptible de se déformer élastiquement en fonction de mouvements relatifs d'ajustement de la peau de pare-chocs (10), du bloc optique (20) et/ou de l'aile (2), **caractérisé en ce que** chaque poutre flexible (30) comporte une partie centrale (31) munie de moyens (32, 33) d'indexage des blocs optiques (20) selon trois axes X, Y et Z et de moyens (38) d'indexage de la peau de pare-chocs (10) selon deux axes X et Z.

2. Ensemble de partie avant selon la revendication 1, **caractérisé en ce que** les moyens d'indexage du bloc optique (20) sont formés par deux pions (32, 33) ménagés sur la face avant de la poutre (30) et par deux pattes inférieures (22, 23), solidaires du blocs optique (20) et destinées à coopérer chacune avec un desdits pions (32, 33).

3. Ensemble de partie avant selon la revendication 1, **caractérisé en ce que** les moyens d'indexage de la peau de pare-chocs (10) sont formés par au moins une portion en creux (38) ménagée sur la partie supérieure de la poutre (30) et s'étendant transversalement suivant la direction générale de cette poutre (30) et par au moins une portion en saillie (11) complémentaire ménagée à la partie supérieure de la peau de pare-chocs (10).

4. Ensemble de partie avant selon la revendication 1, **caractérisé en ce que** le renfort (45) comporte des moyens (46) de positionnement de la zone centrale (11a) du bord supérieur (11) de la peau de pare-chocs (10).

5. Ensemble de partie avant selon la revendication 4, **caractérisé en ce que** les moyens de positionnement sont formés par au moins une gouttière (46) s'étendant transversalement suivant la direction générale du renfort (45) et destinée à coopérer avec ladite zone centrale (11 a) de la peau de pare-chocs (11).

6. Ensemble de partie avant selon l'une quelconque des revendications 1 à 5, **caractérisé en ce que** la première extrémité (34) de chaque poutre flexible (30) comporte une patte inférieure (50) dirigée vers le bas perpendiculairement à la partie centrale (31) de cette poutre (30) pour la fixation d'une poutre supérieure (51) de renfort s'étendant transversalement entre les poutres flexibles (30).

7. Ensemble de partie avant selon l'une quelconque des revendications 1 à 6, **caractérisé en ce que** la seconde extrémité (35) de chaque poutre flexible (30) comporte une patte de fixation (52) d'une poutre inférieure (53) de renfort s'étendant transversalement entre les poutres flexibles (30), parallèlement à la poutre supérieure (51) de renfort.

8. Ensemble de partie avant selon l'une quelconque des revendications 1 à 7, **caractérisé en ce que** chaque poutre flexible (30) comporte une zone de flexion (40) disposée entre la première extrémité (34) et la fixation du bloc optique (20) correspondant.

9. Ensemble de partie avant selon la revendication 8, **caractérisé en ce que** la zone de flexion est formée par une encoche (40) sensiblement verticale.

## Claims

1. Automotive vehicle front part assembly, intended to be fixed on the structure of the vehicle and comprising a bumper skin (10) which forms a bumper fairing and two optical blocs (20), said assembly comprising two flexible beams (30), each including a first end (34) for fixing the bumper skin (10) and a second end (35) which is intended to be connected to a front part (2a) of a wing of the bodywork (2) and a horizontal reinforcement (45) connecting the first ends (34) of the two flexible beams (30) together, said beam (30) being able to deform elastically as a function of relative movements for adjustment of the bumper skin (10), of the optical bloc (20) and/or of the wing (2), **characterised in that** each flexible beam (30) includes a central part (31) which is equipped with means (32, 33) for indexing the optical blocs (20) according to three axes X, Y and Z and means (38) for indexing the bumper skin (10) according to two axes X and Z.

2. Front part assembly according to claim 1, **characterised in that** the indexing means for the optical bloc (20) are formed by two pins (32, 33) which are provided on the front face of the beam (30) and by two lower brackets (22, 23) which are integral with the optical bloc (20) and each intended to cooperate with one of said pins (32, 33).

3. Front part assembly according to claim 1, **characterised in that** the means for indexing the bumper skin (10) are formed by at least one hollow portion (38) which is provided on the upper part of the beam (30) and extends transversely following the general direction of this beam (30) and by at least one complementary projecting portion (11) which is provided on the upper part of the bumper skin (10).

4. Front part assembly according to claim 1, **characterised in that** the reinforcement (45) includes means (46) for positioning the central zone (11a) of the upper edge (11) of the bumper skin (10).

5. Front part assembly according to claim 4, **characterised in that** the positioning means are formed by at least one trough (46) which extends transversely following the general direction of the reinforcement (45) and is intended to cooperate with said central zone (11a) of the bumper skin (11).

6. Front part assembly according to any of the claims 1 to 5, **characterised in that** the first end (34) of each flexible beam (30) includes a lower bracket (50) which is directed towards the bottom perpendicular to the central part (31) of this beam (30) for fixing an upper reinforcement beam (51) which extends transversely between the flexible beams (30).

7. Front part assembly according to any of the claims 1 to 6, **characterised in that** the second end (35) of each flexible beam (30) includes a bracket (52) for fixing a lower reinforcement beam (53) which extends transversely between the flexible beams (30) and parallel to the upper reinforcement beam (51).

8. Front part assembly according to any of the claims 1 to 7, **characterised in that** each flexible beam (30) includes a deflection zone (40) which is disposed between the first end (34) and the fixing of the corresponding optical block (20).

9. Front part assembly according to claim 8, **characterised in that** the deflection zone is formed by a notch (40) which is approximately vertical.

## Patentansprüche

1. Anordnung für den Frontbereich eines Kraftfahrzeugs zur Befestigung am Aufbau des Fahrzeugs mit einer Stossdämpfer-Schürze, die eine Abdeckung eines Stossdämpfers bildet, und zwei optischen Blöcken (20), welche Anordnung zwei flexible Halter (30) enthält, die jeweils ein erstes Ende (34) zur Befestigung der Stossdämpfer-Schürze (10) und ein zweites Ende (35), das mit dem Frontbereich (2a) eines Kotflügels der Karosserie (2) verbunden ist, und einer horizontalen Verstärkung (45), die das erste Ende (34) und die beiden flexiblen Halter (30) untereinander verbinden, wobei der Halter (30) in der Lage ist, sich elastisch bei relativen Einstellbewegungen der Stossdämpfer-Schürze (10), der optischen Blöcke (20) und/oder des Kotflügels (2) zu verformen, **dadurch gekennzeichnet, dass** jeder flexible Halter (30) einen mittleren Bereich (31), der mit Mitteln (32,33) zum Verstellen der Stossdämpfer-Schürze (10) entlang den Achsen X, Y und Z, und Mitteln (38) zum Verstellen der Stossdämpfer-Schürze (10) entlang den Achsen X und Z versehen ist.

2. Anordnung für den Frontbereich gemäß Anspruch 1, **dadurch gekennzeichnet, dass** die Mittel zum Einstellen des optischen Blocks (20) gebildet werden durch Steine (32,33), die an der Front des Halters (30) vorgesehen sind, und zwei untere Füße (22,23), die mit dem optischen Block (20) verbunden sind und vorgesehen sind zum Zusammenwirken mit den Steinen (32,33).

3. Anordnung für den Frontbereich gemäß Anspruch 1, **dadurch gekennzeichnet, dass** die Mittel zum Verstellen der vorderen Stossdämpfer-Schürze (10) gebildet werden durch wenigstens einen hohlen Bereich (38), der ausgearbeitet ist im oberen Bereich der Halter und sich in Querrichtung entsprechend der generellen Richtung des Halters (30) erstreckt, mit einem komplementär vorspringenden Teil (11), das im unteren Teil der Stossdämpfer-Schürze (10) ausgearbeitet ist.

4. Anordnung für den Frontbereich gemäß Anspruch 1, **dadurch gekennzeichnet, dass** die Verstärkung (45) Mittel (46) zur Positionierung des zentralen Bereichs (11a) des oberen Randes (11) der Stossdämpfer-Schürze (10) umfasst.

5. Anordnung für den Frontbereich gemäß Anspruch 4, **dadurch gekennzeichnet, dass** die Mittel zum Positionieren gebildet sind durch wenigstens ein Rinnenprofil (46), das sich in Querrichtung entsprechend der generellen Richtung der Verstärkung (45) erstreckt und bestimmt ist zum Zusammenwirken mit der zentralen Zone (11a) der Stossdämpfer-Schürze (11).

6. Anordnung für den Frontbereich gemäß einem der Ansprüche 1 bis 5, **dadurch gekennzeichnet, dass** das erste Ende (34) jedes flexiblen Halters (30) einen unteren Fuß (50) umfasst, der nach unten gerichtet ist senkrecht zum mittleren Bereich (31) des Halters (30) zur Befestigung eines oberen Verstärkungshalters (51), der sich quer zwischen den flexiblen Haltern (30) erstreckt.

7. Anordnung für den Frontbereich gemäß einem der Ansprüche 1 bis 6, **dadurch gekennzeichnet, dass** das zweite Ende (35) jedes flexiblen Halters (30) einen Fuß einer unteren Verstärkungshalters (53) umfasst, der sich quer zwischen den flexiblen Haltern (30) parallel zum oberen Verstärkungshalter (51) erstreckt.

8. Anordnung für den Frontbereich gemäß einem der Ansprüche 1 bis 7, **dadurch gekennzeichnet, dass** jeder flexible Halter (30) eine vorgeschwächte Zone (40) aufweist, die zwischen dem ersten Ende (34) und der Befestigung des optischen Blockes (20) vorgesehen ist.

9. Anordnung für den Frontbereich gemäß Anspruch 8, **dadurch gekennzeichnet, dass** die vorgeschwächte Zone gebildet ist durch einen im wesentlichen senkrechten Einschnitt (40).
